# EUROPÄISCHE PATENTSCHRIFT

(11) **EP 0 993 714 B1**
(45) Veröffentlichungstag und Bekanntmachung des Hinweises auf die Patenterteilung: **04.09.2002**
(21) Anmeldenummer: 98937511.8
(22) Anmeldetag: 19.06.1998
(51) Int. Cl.: H04L 1/22

(54) **VERFAHREN UND SYSTEM ZUR STEUERUNG DER NUTZUNG VON SATELLITEN-ÜBERTRAGUNGSKAPAZITÄT IN TERRESTRISCHEN NETZEN**
METHOD AND SYSTEM FOR CONTROLLING THE USE OF SATELLITE TRANSMISSION CAPACITY IN TERRESTRIAL NETWORKS
PROCEDE ET SYSTEME POUR COMMANDER L'UTILISATION DE LA CAPACITE DE TRANSMISSION DE SATELLITES DANS DES RESEAUX TERRESTRES

(30) Priorität: 01.07.1997 DE 19728061
(43) Veröffentlichungstag der Anmeldung: 19.04.2000
(73) Patentinhaber: Deutsche Telekom AG, 53113 Bonn (DE)
(72) Erfinder: HENKEL, Hans-Jürgen, D-64380 Rossdorf (DE)
(86) Internationale Anmeldenummer: EP9803747
(87) Internationale Veröffentlichungsnummer: WO99004507

(56) Entgegenhaltungen:
- EP-A- 0 330 178
- DE-A- 4 308 161
- DE-A- 19 610 400
- US-A- 4 597 079
- PATENT ABSTRACTS OF JAPAN vol. 095, no. 001, 28. Februar 1995 & JP 06 284059 A (NEC CORP;OTHERS: 01), 7. Oktober 1994
- PATENT ABSTRACTS OF JAPAN vol. 014, no. 079 (E-0888), 14. Februar 1990 & JP 01 293020 A (NEC CORP), 27. November 1989
- PATENT ABSTRACTS OF JAPAN vol. 011, no. 077 (E-487), 7. März 1987 & JP 61 232727 A (NEC CORP), 17. Oktober 1986

## Beschreibung

Die Erfindung betrifft ein Verfahren und eine Schaltungsanordnung zur Steuerung der Nutzung von Satelliten-Übertragungskapazität zum Ersetzen gestörter Datenleitungen in terrestrischen Netzen nach dem Oberbegriff des Patentanspruches 1 bzw. des Patentanspruches 7.

Geschaltete Leitungsbündel in Sprach- und Datennetzen werden im allgemeinen wechselseitig zwischen rechnergesteuerten Vermittlungseinrichtungen betrieben. Bei dieser Betriebsweise können beide Vermittlungseinheiten unabhängig voneinander auf freie Leitungen des Bündels zugreifen und diese belegen. Bei völligem Ausfall bestimmter Datenleitungen ist dadurch auch ein automatisches Ersatzschalten auf eine freie und betriebsfähige Datenleitung eines terrestrischen Netzes möglich.

Die bekannten Verkehrsmanagement-Verfahren sind in der CCITT-Empfehlung E.412 "Network Management Controls" (10/92) zusammengefaßt und prinzipiell beschrieben. Es ist jedoch auch weiterhin bekannt, gestörte Datenleitungen in terrestrischen Netzen durch die Nutzung freier Satellitenübertragungskapazität zu beheben. Insbesondere im Bereich der Anschlußleitungen benötigen Leitungsersatzschaltungen über Satellit eine manuelle Einleitung nach Anforderung von Übertragungskapazität an eine Zentrale, dazu wird ein Hilfskanal verwendet, der über terrestrische Leitungen oder über Satellit geführt wird.

Die manuelle Einleitung der Ersatzschaltung nach dem Stand der Technik ist zeitintensiv. Es müssen gegebenenfalls noch Verbindungskonfigurationen zu den beteiligten Standorten übertragen werden und im Falle der Ersatzschaltanforderung muß ein Hilfskanal sicher verfügbar sein. Dies kann insbesondere bei einem terrestrischen Hilfskanal, zum Beispiel bei der Führung von Hilfskanal und Nutzkanal in einer Anschlußleitung zu Problemen führen, weil kein Hilfskanal unmittelbar verfügbar ist.

In der DE 43 08 161 A1 ist ein System zur Nachrichtenübertragung über Satelliten beschrieben, das mindestens eine Sendestation und mindestens eine Empfangsstation, mindestens eine Überwachungsschaltung zur Überwachung des über die Satellitenstrecke von einer Sendestation gesendeten und einer Empfangsstation empfangenen Singals dient. Bei Störung dieses Signals ergibt sich eine Ersatzstrecke dadurch, daß mindestens ein Netzmodul vorgesehen ist, das automatisch eine Nachrichtenverbindung zwischen einer Sendestation und einer Empfangsstation über ein Wählnetz herstellt, wenn ein Parameter des Signals, zum Beispiel witterungsbedingt, kritische Werte annimmt und das diese Verbindung wieder auslöst, wenn der Parameter des Signals unkritische Werte annimmt. Damit ist dieses System eindeutig auf das Überwachen der Übertragungsqualität in Satellitensystemen mit der Möglichkeit automatisch auf Festnetze bei festgestellten Qualitätsmängeln des Signals umzuschalten, beschränkt.

Außerdem ist in dem Patent Abstract of Japan, Veröffentlichungsnummer 01293020 ein Verfahren zum Ersetzen von defekten Satellitenübertragungskanälen durch Leitungen von Festnetzen beschrieben. Dieses Verfahren ist genauso wie das oben beschriebene Verfahren nicht für den Fall anwendbar, daß Leitungen aus einem Festnetz ausfallen und dafür freie Übertragungskapazität von Satellitensystemen benutzt wird.

Der Erfindung liegt die Aufgabe zugrunde, ein Verfahren und ein System bzw. eine Schaltungsanordnung zu schaffen, die eine Ersatzschaltung über Satellit unabhängig von dem gegebenenfalls gestörten Übertragungsmedium automatisch einleiten und überwachen, wobei für Ersatzschaltzwecke vorzuhaltende Satelliten-Übertragungskapazität von einer größeren Anzahl Anwender nutzbar sein soll und die Zuordnung im Ersatzschaltfall eigenständig, das heißt automatisch erfolgen muß.

Die erfindungsgemäße Lösung der Aufgabe besteht in einem Verfahren, das im kennzeichnenden Teil des Patentanspruches 1 charakterisiert ist.

Die erfindungsgemäße Lösung für ein System bzw. eine Schaltungsanordnung zur Lösung der Aufgabe ist im Kennzeichen des Patentanspruches 7 charakterisiert.

Weitere Merkmale bzw. Ausgestaltungen der Erfindung sind für das Verfahren in den Kennzeichen der Patentansprüche 2 bis 6 charakterisiert und für das System bzw. die Schaltungsanordnung in den Kennzeichen der Patentansprüche 8 bis 14.

Die Vorteile einer derartigen Lösung liegen darin, daß eine größere Anzahl von Satelliten-Terminals auf eine kleinere Anzahl von Satelliten-Übertragungskanälen im Ersatzschaltfall mittels einer automatisierten, dezentralen, lokalen und intelligenten Steuereinheit zugreifen kann. Die hierfür erforderliche Steuersoftware ist in der jeweiligen lokalen Steuereinheit gespeichert. Sie steuert und überwacht die Komponenten des Terminals im Wartezustand und im Ersatzschaltfall. Sie übernimmt auch die automatisierte Steuerung des Verbindungsauf- und abbaus; dabei reagiert die Software auf Steuersignale der Kundendateneinrichtung, ohne jedoch die Kundendaten selbst zu beeinflussen. Die automatisierte und dezentrale Steuerung der Nutzung von Satelliten-Übertragungskapazität für das Ersatzschalten ausgefallener Leitungen in terrestrischen Netzen und die Führung der Ersatzverbindung über ein zweites Übertragungsmedium, nämlich der Satelliten-Übertragung, einschließlich einer automatisierten Kapazitäts-Nutzungsüberwachung erfolgt softwaregesteuert, wobei lokal der Belegungszustand der Satelliten-Übertragungskapazität überwacht und der Ausfall der terrestrischen Verbindung erkannt wird und eigenständig und automatisch die Ersatzschaltung auf die Satelliten-Übertragung vorgenommen wird. Die Funktion der Hub ist dabei passiv und dient der Verbindungsdatensammlung und der Vorkonfiguration der einzelnen Terminals bei Erstinstallation und bei Änderung der Netzgestaltung. Die Aktualisierung der Netzsoftware kann ohne direkten personellen Einsatz zu den Terminal-Standorten übertragen werden. Weitere Leistungsmerkmale, wie der Reservierungsbetrieb bei nicht genutzter Satelliten-Kapazität, sind ohne weiteres möglich. Die Verbindung der Hub zu den Terminals kann auf unterschiedlichen Wegen erfolgen, zum Beispiel einer Telefon-Modemstrecke, über einen ISDN-Anschluß, über eine GSM-Verbindung mit Modem, über eine Satelliten-Verbindung innerhalb der im Netz verfügbaren Kapazität und ähnlichen. Eine Synchronisation aller Satelliten-Terminals kann durch die Integration eines sogenannten DCF77-Empfängers in jedem Terminal dadurch erfolgen, daß die Normzeit als Systemzeit für die Taktung verwendet wird.

Mit den oben beschriebenen Maßnahmen, Verfahrensschritten und dem beschriebenen System ist eine eigenständige, lokale Steuerung, die mit der speziell für diese Anwendung erstellten Software das Backup-Terminal überwacht, mit dem Datenübertragungsgerät des Anwenders begrenzt zusammenarbeitet und aus der Analyse eines Datensteuersignals das Vorliegen eines Ersatzschaltfalls erkennt, erstmals möglich. Die Steuereinrichtung bzw. das System schaltet den Senderträger des betroffenen Satelliten-Modems ein, den dann alle anderen, nicht betroffenen Terminals im Netz mit empfangen. Dabei wird die Übertragungskapazität des asynchronen Overhead des Sat-Modems für die Übertragung von Zieladressen genutzt. Die eigenständige und dezentrale Steuerung bzw. Verwaltung der Satelliten-Übertragungskanäle eines Pools durch viele Satelliten-Terminals ohne Mitwirkung einer steuernden Zentrale ermöglicht es, daß auch im Ausfall-Zustand des terrestrischen Übertragungsweges eine freilaufende Ersatzschaltung über ein anderes Medium möglich ist.

Weitere Merkmale bzw. Ausgestaltungen des erfindungsgemäßen Verfahrens bzw. der erfindungsgemäßen Schaltungsanordnung oder des Systems ergeben sich aus den nachfolgend beschriebenen Ausführungsbeispielen.

Die Erfindung wird nun anhand von in der Zeichnung dargestellten Ausführungsbeispielen detailliert beschrieben, wobei in der Beschreibung, in den Patentansprüchen, in der Zusammenfassung und in der Beschreibung die in den hinten angefügten Listen für Begriffserläuterungen bzw. für verwendete Bezugszeichen zugeordnete Begriffe verwendet werden.

Es zeigen:
- Fig. 1: ein prinzipielles Schaltbild eines Systems zum Ersatzschalten von gestörten Leitungen eines terrestrischen Netzwerkes durch eine Satellitenverbindung;
- Fig. 2: einen Trägerpool und
- Fig. 3A+B: ein prinzipielles Flußdiagramm für das Verfahren.

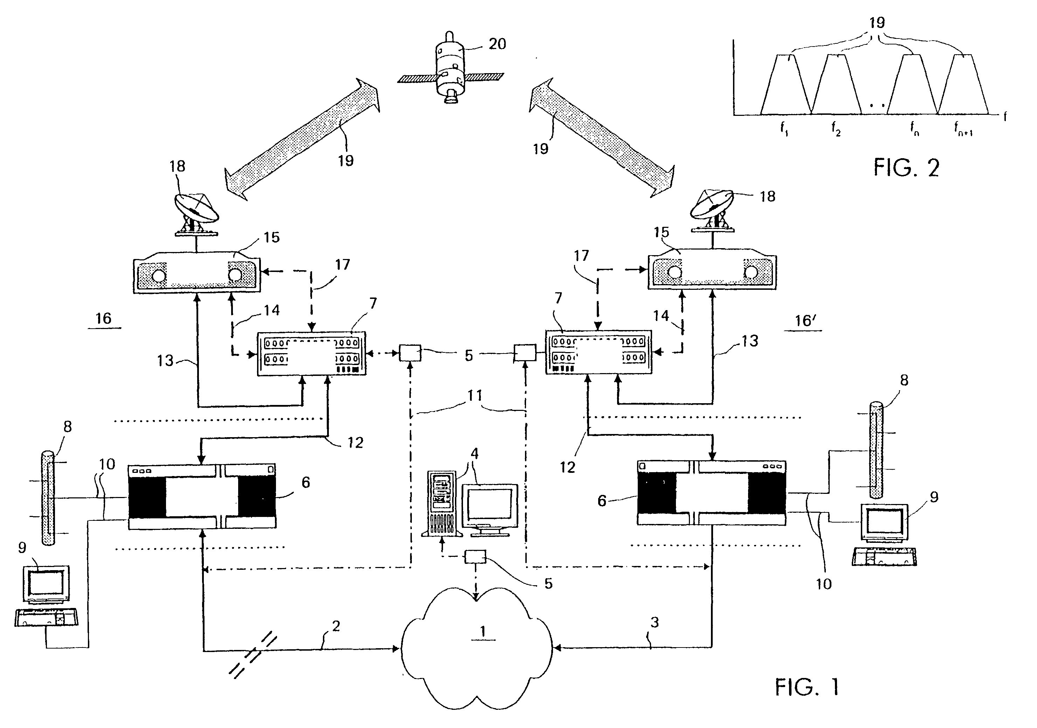

In Fig. 1 ist ein Prinzipschaltbild dargestellt, das zur Realisierung des Systems und Verfahrens zur automatischen, dezentralen Steuerung der Nutzung von Satelliten-Übertragungskapazität für das Ersatzschalten gestörter Datenleitungen in terrestrischen Netzen erforderlich ist. Fig. 1 zeigt ein terrestrisches Netz 1, das über Leitungen 2 und 3 jeweils mit einem Router oder einer ähnlichen Schaltung 6 verbunden ist. In dem dargestellten Beispiel wird angenommen, daß die Leitung 2 gestört ist. Das terrestrische Netz 1 ist außerdem mit einer sogenannten Hub 4 über ein Modem 5 verbunden. Die Router 6 sind jeweils mit Kundeneinrichtungen 8 und mit Terminals 9 zur Datenein- und ausgabe verbunden. Außerdem sind die Router 6 jeweils mit einer speicherprogrammierten Steuerschaltung 7 verbunden und zwar jeweils über eine Leitung 12. Außerdem ist jede der beiden speicherprogrammierten Steuerschaltungen 7 mit einem Modem 5 verbunden, über das die speicherprogrammierten Steuerschaltungen 7 über eine Leitung 11 mit der Hub 4 in Verbindung treten kann, zum Beispiel für die Meldung erkannter Gerätefehler im Ruhezustand. Die speicherprogrammierten Steuerschaltungen 7 sind jeweils mit einem Satelliten-Modem 15 über eine Leitung 13 verbunden. Außerdem bestehen noch Verbindungen über jeweils vorhandene Steuerleitungen 14 und 17. Die beiden Modems 15 stehen jeweils mit einer Satellitenantenne 18 in Verbindung, die über einen Satelliten 20 über bestimmte Trägerfrequenzen fₙ 19 miteinander in Verbindung stehen.
Ein Back-Up Terminal 16 oder 16' besteht aus
- der Satelliten-Außeneinheit, Antenne 18, Träger 19 und Satellit 20
- der Verbindung zur Inneneinheit und
- der Inneneinheit mit:
   Satelliten-Modem (Sat-Modem) 15 und
   Steuereinrichtung 7 = speicherprogrammierte
   Steuerschaltung
   Anschluß der speicherprogrammierten Steuerschaltung 7 an das terrestrische Wählnetz 1 über Modem 5 und Leitung 11.

Die Hub 4 besteht aus einem PC, der über eine geeignete Schnittstellen-Karte an das terrestrische Netz 1 angeschlossen ist. Der PC kann gegebenenfalls für die Weitergabe der Verbindungsdaten zu Tarifierungs/Fakturierungszwecken mit anderen Netzen verbunden sein. Der PC verfügt über eine Software, die über die terrestrische Verbindung 11 mit den einzelnen speicherprogrammierbaren Steuerschaltungen 7 der Back-Up Terminals 16, 16' kommunizieren kann. Hub 4 und speicherprogrammierbare Steuerschaltung 7 verfügen über ein geeignetes Adressierungssystem.
Die Hub 4 kann bei Bedarf mit den speicherprogrammierbaren Steuerschaltungen 7 der einzelnen Terminals in Kontakt treten, zum Beispiel regelmäßig zum Monatsende zur Abfrage der Verbindungsdatei.
Die Erstellung und Zuspielung von Umkonfigurierungsdaten zu den einzelnen Terminals wird manuell eingeleitet und überwacht. Die Hub 4 kann die Nutzung mehrerer Übertragungskanal-Pools registrieren; die Hub 4 hat Kenntnis über die einzelnen Übertragungskanäle (Frequenzen, Datenrate) sowie ihre Zuordnung zu den jeweiligen Pools.

Eine On-Line Überwachung der Nutzung der Übertragungskanäle erfolgt nicht. In Störungsfällen melden die speicherprogrammierbaren Steuerschaltungen 7 die Modem-Parameter zu einer ersten Störungseingrenzung an die Hub 4.

In Fig. 2 ist ein Trägerpool mit einer Anzahl von mehreren Satelliten-Übertragungskanälen f₁ - fₙ₊₁ einer bestimmten Datenrate dargestellt. Im nachfolgenden werden nun die Funktionen der einzelnen Komponenten sowie deren Wirkungsweise und deren Zusammenwirken beschrieben.

Das Back-Up Netz, das streng genommen gar kein "Netz" darstellt, da eine freizügige Verbindungswahl nicht möglich ist, besteht aus einem Pool von Satelliten-Übertragungskanälen, die später anhand von Fig. 2 beschrieben werden und speziell für den Einsatz in Back-Up Netzen mit vorbereiteten Terminals bei Ersatzschaltbedarf genutzt werden können. Dabei teilen sich viele Terminals eine kleine Anzahl von Satelliten-Übertragungskanälen. Eine zentrale Berechtigungüberprüfung für einen Back-Up Verbindungsaufbau findet nicht statt. Die Nutzung der Übertragungskanäle erfolgt nach dem Prinzip des ersten Zugriffs ("first come, first served"). Eine Reservierung von Übertragungskanälen oder eine Vorrangberechtigung bei der Nutzung der Übertragungskanäle ist grundsätzlich möglich, sowie eine zentrale On-Line Überwachung der Nutzung des Pools. Alle Ersatz zu schaltenden Verbindungen sind symmetrische Duplex-Kanäle (gleiche Datenrate in Hinund Rückrichtung). Die einzelnen Übertragungskanäle werden zu Kanalpaaren mit den Mittenfrequenzen fₙ/fₙ₊₁(n=1,3,5..) zusammengefaßt. Im Urzustand des Back-Up Netzes, der immer angestrebt wird, sind alle Übertragunskanäle ungenutzt und die Sendeträger aller im Netz zugelassenen Terminals sind ausgeschaltet; zugelassen bedeutet hier, die für die rechtmäßige Nutzung der Übertragungskanäle erfaßten Terminals. An allen Terminals sind die Sat-Modems auf den Empfang des ersten Übertragungskanals (f₁) eingestellt; außerdem wird angenommen, daß alle verwendeten Sat-Modems in einen sogenannten "Loop Back"-Mode geschaltet werden können. Damit kann gegebenenfalls beim Aufsynchronisieren auf einen beliebigen Träger 19 bei nicht übereinstimmender Adresse eine ungerechtfertigte Datenausgabe verhindert werden. Da kein Terminal sendet, befinden sich alle Sat-Modems 15 im SyncLoss-Zustand (Synchronisation Loss = kein Empfang und damit keine Synchronisation auf ein Empfangssignal), der der speicherprogrammierbaren Steuerschaltung 7 (SPS 7) über eine Schnittstelle und Leitung 17 mitgeteilt wird. Die speicherprogrammierbare Steuerschaltung 7 überwacht den Sat-Modem-Status und einen Ausgang eines Routers 6 oder des Datenendgerätes, zum Beispiel Terminal 9, der eine Ausfallerkennung der terrestrischen Datenleitung 2 signalisiert. Ein terrestrischer Leitungsausfall (Back-Up Fall) wird im Normalfall an beiden Punkten einer Verbindung erkannt und von dem jeweiligen Router 6 der speicherprogrammierbaren Steuerschaltung 7 in der Form mitgeteilt, daß das DTRA-Signal in dem von dem Router 6 ausgehenden Datenstrom ausgewertet wird (Potentialwechsel). Zur Vermeidung eines langwierigen Suchprozesses und damit zu einer Beschleunigung der Ersatzschaltung erhält in jeder Punktzu-Punkt Verbindung ein Terminal eine Vorrangstellung als Master 16 gegenüber dem Gegenterminal als Slave 16'; nur der Master 16 ist softwaregesteuert befähigt, eine Ersatzschaltung einzuleiten.

Sobald am Standort, zum Beispiel der Terminals 16, 16', die Router 6 den Ausfall der terrestrischen Leitung 2 einer Verbindung feststellen, erkennt die jeweilige speicherprogrammierbare Steuerschaltung 7 (SPS) den Potentialwechsel des DTR-Signals. Die speicherprogrammierbare Steuerschaltung 7 (SPS) des Terminals 16 schaltet den Sendeträger f₁ am Modem 15 (M+C Interface) ein, das signalisiert Beginn der Tarifierung und ändert die Einstellung der Empfangsfrequenz auf f₂. Über Leitung 14 sendet die Master-speicherprogrammierbare Steuerschaltung 7 (SPS) Verbindungsinformationen bis zum Zustandekommen der Verbindung, maximal für t₁=a sec. zum Terminal 16' (Slave).
Die Verbindungsinformationen beinhalten:
- Zieladresse (Terminal 16'),
- vom Terminal 16' einzustellende Sendefrequenz f₂,
- Datenrate,
- Aufforderung zur Einschaltung des Sendeträgers f₂.

Frequenz und Datenrate werden, obwohl im Normalfall bekannt, für Prüfzwecke und zur Sicherstellung der Kompatibilität der Modemeinstellungen übertragen. Bei Nichtübereinstimmung Abbruch des Verbindungsaufbaus aus Sicherheitsgründen; Vermeidung von Störungen anderer durch unter Umständen unzulässige Trägeraktivierung.

Alle Terminals (außer Terminal 16) empfangen f₁ (Modem Sync). Die Verbindungsinformationen werden von allen speicherprogrammierbaren Steuerschaltungen 7 (SPS) ausgewertet. Anhand der Zieladresse erkennt Terminal 16' den an ihn gerichteten Verbindungswunsch, die speicherprogrammierbare Steuerschaltung 7 (SPS) überprüft die Einstellungsdaten und schaltet den Sendeträger f₂ ein; nach Bestehen der Verbindung werden über Leitungen 14 die eigene Adresse und die aktuellen Einstellungsdaten als Bestätigung an Terminal 16 gesendet. Das Modem Terminal 16 synchronisiert auf f₂ und wertet die gesendeten Daten aus. Beide speicherprogrammierbaren Steuerschaltungen 7 (SPS) erkennen das Bestehen der Back-Up Verbindung, heben gegebenenfalls die "Loop-Back" Schaltung der beteiligten Modems auf und leiten dies gegebenenfalls als Startsignal (DTRB-Signal: Potentialwechsel) an den jeweiligen Router 7 weiter.

Im folgenden wird die Verbindung der speicherprogrammierbaren Steuerschaltung 7 (SPS) zur Hub 4 (optional, als Erweiterung der Leistungsfähigkeit) beschrieben. Nach dem Eintreten eines Back-Up Falls versuchen die speicherprogrammierbaren Steuerschaltungen 7 (SPS) der betroffenen Terminals 9 über die terrestrische Wählleitung 2 oder 3 den Störfall an die Hub 4 zu melden. Da in den meisten Fällen, insbesondere im Anschlußbereich, die Datenleitung und die ISDN-Leitung in einem Kabel geführt werden, wird die speicherprogrammierbare Steuerschaltung 7 (SPS) des gestörten Leitungsabschnitts 2 vergeblich versuchen, die Hub 4 zu erreichen. Die speicherprogrammierbare Steuerschaltung 7 (SPS) des nicht gestörten Leitungsabschnitts 3 erreicht die Hub 4. Diese erkennt die Meldung und schließt aus dem Ausbleiben der Meldung des zweiten Terminals das Vorliegen eines Störfalls, der zu einer Anzeige auf der Hub 4 (Überwachungsrechner) führt. In dem Fall, daß auch die zweite Meldung eingeht, ist eine Anzeige vorzusehen, die eine manuelle Untersuchung der SPS-Meldung einleiten kann. In einer bestehenden Verbindung überwacht die speicherprogrammierbare Steuerschaltung 7 (SPS) den Modem-Sync und registriert gegebenenfalls die Ursache eines unplanmäßigen Verbindungsabbruchs. Über die Leitung 14 in beiden Richtungen tauschen die speicherprogrammierbaren Steuerschaltungen 7 (SPS) selbst Überwachungsdaten aus, zum Beispiel die eigene Adresse. Die Router 6 beider Terminals erkennen, zum Beispiel durch regelmäßiges Polling, die Rückkehr der terrestrischen Leitung 2; die beteiligten speicherprogrammierbaren Steuerschaltungen 7 (SPS) stellen dies durch einen erneuten Potentialwechsel des DTR-Signals fest. Die Master-speicherprogrammierbare Steuerschaltung 7 (SPS) fordert über Leitung 14 die Slave-speicherprogrammierbare Steuerschaltung 7 (SPS) auf, den Träger f₂ des Modems 15 abzuschalten. Modem des Terminals 16 registriert SyncLoss f₂, der über M+C Schnittstelle 17 von der speicherprogrammierbaren Steuerschaltung 7 (SPS) übernommen wird. Die speicherprogrammierbare Steuerschaltung 7 (SPS) schaltet daraufhin den Träger f₁ ebenfalls ab (Ende der Tarifierung) und stellt das Modem 15 wieder zum Empfang von f₁ ein. Modem 15 des Terminals 16' registriert SyncLoss f₁ und bleibt auf Empfang von f₁. Beide Modems 15 werden von der speicherprogrammierbaren Steuerschaltung 7 (SPS) gegebenenfalls wieder in den "Loop-Back" Modus geschaltet. Nach erfolgreichem Verbindungsabbau teilen beide speicherprogrammierbaren Steuerschaltungen 7 (SPS) über die terrestrischen Wählleitungen 2 bzw. 3 eigenständig der Hub 4 die Rückkehr in den Wartezustand mit.

Wie bereits beschrieben, empfangen alle nicht aktiven Terminals die Verbindungsinformationen. Alle nicht angesprochenen Terminals werden nach der Registrierung des belegten Trägerpaares f₁/f₂ in der speicherprogrammierbaren Steuerschaltung 7 (SPS) auf den Empfang des nächsten Trägerpaares f₃/f₄ bzw. fₙ/fₙ₊₁ eingestellt; n=1, 3, 5, ... . Um in absehbarer Zeit in den Urzustand zurückkehren zu können, schaltet die jeweilige speicherprogrammierbare Steuerschaltung 7 (SPS) eines jeden nicht in eine Verbindung eingebundenen Terminals nach einer Wartezeit von t₂ = b sec. (b zum Beispiel 15 sec.) das Modem 15 auf den Empfang von f₁ zurück. Ist der Träger 19 noch belegt, das heißt ein anderes Terminal nutzt diesen Träger, so synchronisiert das Modem 15 auf (Modem Sync). Die speicherprogrammierbare Steuerschaltung 7 (SPS) erkennt den Modem Sync und schaltet, zur Sicherstellung eines stabilen Empfangs, nach t₃ = c sec. (zum Beispiel 15 sec.) das Modem 15 wieder auf den Empfang von f₃/fₙ. Nach der Wartezeit t₂ = b sec. erfolgt eine erneute Aufprüfung auf f₁. Erfolgt kein Empfang von f₁, das heißt Modem SyncLoss, so ist dies das Indiz für die Nichtbelegung des Trägerpaares f₁/fₙ. Alle Terminals/Modems, die nicht auf f₁ aufsynchronisieren können, verbleiben auf dem Empfang von f₁. Tritt bei einer bereits bestehenden Ersatzleitung, also f₁/f₂ (fₙ/fₙ₊₁) belegt, ein weiterer Ersatzschaltfall ein, so befinden sich alle nicht aktiven Terminals in einer nicht synchronisierten Empfangssituation. Die Terminals n (zum Beispiel 3) und n+1 (zum Beispiel 4) werden zur Ersatzschaltung aufgefordert; Terminal 3 steuert den Verbindungsaufbau. Alle nicht beteiligten Terminals gehen auf den Empfang des nächsten freien Trägers fₙ und prüfen entsprechend der Wartezeit t₂ = b auf die Träger f₁ und fₙ, bis sie im Idealfall auf dem Empfang von f₁, dem Urzustand, verbleiben. Die Reaktionszeit des "Netzes", das heißt die Zeit, die ein Terminal nach Erkennen eines terrestrischen Leitungsausfalls zur Bereitstellung einer Back-Up Verbindung benötigt, ist abhängig von der Anzahl der im Pool bereitgehaltenen Träger, der Dauer der Prüf- und Umsteuervorgänge des Modems zur Feststellung der Verfügbarkeit eines Trägerpaares und gegebenenfalls anderen, noch nicht erkannten Einflüssen.

Da alle Terminals nicht synchronisiert betrieben werden, erfolgen alle Prüf- und Umsteuervorgänge individuell. Nach Bestehen einer aktiven Ersatzschaltung kann also jede weitere Ersatzschaltanforderung dadurch verzögert erfolgen, daß zum Beispiel Terminal 16 (Master) gerade auf einer belegten Frequenz aufprüft, somit nicht reagieren kann, und Terminal 16' (Slave) auf irgendeiner Warteposition verharrt, die aber nach t₂ = b sec. zur Aufprüfung auf den vordersten freien Träger wieder verlassen wird. Zum Aufbau der gewünschten Ersatzschaltung muß also Terminal 16 nach Verlassen der belegten Frequenz den nächsten freien Träger suchen, dort verbleiben und nach Aktivierung von Träger fₙ seinen Verbindungswunsch dauernd t₁ = a sec. abstrahlen, bis Terminal 16' auf fₙ aufsynchronisiert hat und den Verbindungswunsch erkennt. Danach erfolgt der bereits beschriebene Verbindungsaufbau. Treten bei mehreren terrestrischen Leitungen gleichzeitig Verbindungsstörungen auf, so besteht die Gefahr von Mehrfachaussendungen verschiedener Master-Terminals auf einem Übertragungskanal (Ausnahmefall, siehe unter Sternnetz). Dabei kann es zu Kollisionen kommen, die ein sicheres Synchronisieren des Modems 15 der jeweiligen Slave-Terminals 16' verhindern. Die Slave-Modems 15 verfallen unter Umständen in einen unsicheren Betriebszustand, der der speicherprogrammierbaren Steuerschaltung 7 (SPS) als SyncLoss mitgeteilt wird. Die Slave-speicherprogrammierbare Steuerschaltung 7 (SPS) geht nunmehr davon aus, daß der Übertragungskanal unbelegt ist und verbleibt dort für die Wartezeit t₂ = b sec.; danach erneut Starten des Prüfvorgangs nach dem vordersten freien Übertragungskanal f₁. Die Master-Terminals 16 erwarten nach der Aussendung der Verbindungsaufforderung den Empfang des Slave-Terminals 16' auf fₙ₊₁ innerhalb eines Zeitfensters von t₁ = a min.. Erfolgt innerhalb dieses Zeitfensters kein Aufsynchronisieren auf fₙ₊₁, so wird der Sendeträger fₙ abgeschaltet und von der Master-speicherprogrammierbaren Steuerschaltung 7 (SPS) erneut das Suchen nach dem vordersten freien Übertragungskanals eingeleitet. Befindet sich das Master-Terminal 16 bereits auf dem vordersten Übertragungskanal, so startet die speicherprogrammierbare Steuerschaltung 7 (SPS) nach einer statistischen Wartezeit von t₅ = e sec. erneut einen Verbindungsaufbau über f₁.

Als Sonderfall/Ausnahmefall ist der Einsatz in einem Sternnetz anzusehen, in dem vom Sternpunkt aus mehrere Verbindungen zu den Außenstationen betrieben werden. Der Sternpunkt ist in dem Fall immer das Master-Terminal 16, das die Schaltung von gegebenenfalls mehreren Ersatzverbindungen (für jede ein Modem) einleitet. Ist die terrestrische Leitung zum Sternpunkt selbst gestört, so werden vorab in der speicherprogrammierbaren Steuerschaltung 7 (SPS) abgelegte Verbindungen vorrangig aufgebaut. Über die Anzahl der dann zustande gekommenen Verbindungen ist eine Aussage nicht möglich, wenn mehrere Netze Zugriff auf die Pool-Kanäle haben. Außerdem kann ein solcher Ersatzschaltfall bei knapp bemessenen Übertragungskanälen bezogen auf die Anzahl der Terminals eine vollständige Nutzung des Pools zur Folge haben. Andere unter Umständen eintretende Ersatzschaltfälle werden dann abgewiesen, die Terminals laufen im Prüfvorgang nach freien Übertragungskanälen. Gegebenenfalls erfolgt Anzeige an der speicherprogrammierbaren Steuerschaltung 7 (SPS). Eine Prioritätensteuerung sollte dann vorgesehen werden.

Als weiterer Sonderfall sind vollvermaschte Netze zu betrachten, in denen im Idealfall jedes Terminal in einer Art Wählverbindung jedes andere Terminal erreichen kann. Mit der hier beschriebenen Master-Slave Beziehung ist dies so nicht möglich. Jedoch ist eine Modifikation ohne weiteres dahin denkbar, daß für die Ersatzschaltung in solchen Netzen definierte Verkehrsbeziehungen in der speicherprogrammierbaren Steuerschaltung 7 (SPS) vorab festgelegt werden, einschließlich der jeweiligen Funktion der Standorte als Master oder Slave. Die Ersatzschaltung entspricht dann einer normalen Punkt-zu Punkt Verbindung.

Wird während einer bestehenden Ersatzverbindung eine Verschlechterung der Übertragungsqualität erkannt, zum Beispiel durch eine erhöhte Bitfehlerrate, die schließlich zu einem SyncLoss einer der beiden Teilstrecken führt, so wird nach einer Wartezeit von
t₆ = f min die Gesamt-Verbindung abgebaut, eingeleitet von der jeweiligen speicherprogrammierbaren Steuerschaltung 7 (SPS) (Master oder Slave). Gleichzeitig erfolgt eine Alarmanzeige. Stellt die Master-speicherprogrammierbare Steuerschaltung 7 (SPS) keinen eigenen Gerätefehler fest, so kann sie optimal nach einer Wartezeit t₇ = g sec. einen neuen Verbindungsaufbau einleiten. Führt dieser nicht zu einer erfolgreichen Verbindung, erfolgt eine Daueralarmierung in der speicherprogrammierbaren Steuerschaltung 7 (SPS) und gegebenenfalls eine Meldung über die Leitung 11 und die terrestrische Wählverbindung 1 an die Hub 4.

Ein unsicherer Betriebszustand eines Master-Terminals 16, das auf f₁ empfangsbereit ist, kann eintreten, wenn am Standort durch Wetterbedingungen die Empfangsfeldstärke so stark abgesunken ist, daß ein etwaiger Back-Up Fall eines anderen Standortes nicht erkannt werden kann, da das Modem 15 im SyncLoss bleibt und damit ein freies Kanalpaar anzeigt. Nach Wetterbesserung und angestiegener Empfangsfeldstärke synchronisiert das Modem 15 jedoch auf und erkennt den Besetztfall. Die speicherprogrammierbare Steuerschaltung 7 (SPS) veranlaßt dann den üblichen Suchlauf. Tritt in dem beschriebenen unsicheren Betriebszustand in der Verbindung des Master-Terminals 16 zusätzlich ein Back-Up Fall ein, so wird dieses den Sendeträger f₁ aktivieren und damit bei bereits belegtem Trägerpaar eine Störung infolge der Doppelaussendung verursachen. Die bereits bestehende Verbindung kann dadurch unterbrochen werden. Die Unterbrechung läßt sich unter Umständen vermeiden, wenn t₆ (Wartezeit bei SyncLoss) größer angesetzt ist als t₁ (Wartezeit des Masters auf Antwort Slave), da das Master-Terminal 16 bei ausbleibender Rückantwort die Aussendung von f₁ wieder abbricht und nach einem anderen freien Trägerpaar sucht. Dabei wird davon ausgegangen, daß das zugehörige Slave Terminal 16' nicht empfangsgestört ist und dadurch die Belegung von f₁/fₙ erkannt hat. Die speicherprogrammierbare Steuerschaltung 7 (SPS) überwacht lokal an jedem Standort über die M+C Schnittstelle 17 das Modem 15 und/oder, falls entsprechende Möglichkeiten vorhanden, die Außeneinheit. Werden dabei Fehler festgestellt, die nicht auf Konfigurationsfehlern beruhen, bzw. die nicht durch Neu/Umkonfiguration behoben werden können, so ist ein Verbindungsaufbau nicht möglich.

An die speicherprogrammierbare Steuerschaltung 7 (SPS) können zur lokalen Anzeige von Fehlern und Verbindungsausfällen Einrichtungen zur optischen und akustischen Alarmierung angeschaltet oder integriert werden. Nicht zustande kommende Back-Up Verbindungen aufgrund von Besetztfällen, alle Übertragungskanäle belegt, können optisch und/oder akustisch angezeigt werden. Alle Fehlermeldungen werden in der speicherprogrammierbaren Steuerschaltung 7 (SPS) gespeichert.

Die Überwachung der Terminals 16, 16' erfolgt durch die speicherprogrammierbare Steuerschaltung 7 (SPS). Festgestellte Anomalien werden zusätzlich zur lokalen Speicherung unmittelbar über die terrestrische Wählverbindung 1 an die Hub 4 gemeldet. Dazu wird das von der DTAG verwendete Verfahren der FBA eingesetzt.

Bei lokaler Datenerfassung werden in der speicherprogrammierbaren Steuerschaltung 7 (SPS) alle Ersatzschaltverbindungen und Verbindungsaufbauversuche abgespeichert. Erfaßt werden sollen Verbindungsbeginn und -ende, Art des Verbindungsendes, regulär/Abbruch, Ursache des Abbruchs.

Bei der zentralen Erfassung werden zu einem in der speicherprogrammierbaren Steuerschaltung 7 (SPS) abgelegten Zeitpunkt die einzelnen Terminals die in einem bestimmten Zeitraum, zum Beispiel ein Monat, abgewickelten Verbindungen an die Hub übersendet.

Die speicherprogrammierbare Steuerschaltung 7 (SPS) speichert alle lokal erforderlichen Daten, die erforderlich sind für
- Kommunikation mit eigenem Modem, Router/DTE, Modem der Gegenstelle, gegebenenfalls Außeneinheit;
- Verbindungsaufbau mit Gegenstelle(n): Adresse(n), Frequenzen der Übertragungskanäle, Sendeleistung entsprechende Datenrate(n) und Linkanforderung für jeden Standort;
- Alarmierungskonzept;
- Kommunikation mit der Hub.

Die speicherprogrammierbare Steuerschaltung 7 (SPS) arbeitet eigenständig ohne angeschlossenes Eingabeterminal. Alle Abläufe erfolgen nach dem oben angegebenen Verfahren. Die dafür erforderliche Software ist in einem Speicher abzulegen, der zum Beispiel auf Kundenwunsch auch als nichtflüchtiger Speicher ausgeführt sein kann.

Die Verbindungsdaten werden für Tarifierungs- und Verkehrsauswertezwecke gegebenenfalls regelmäßig durch die vorübergehende Anwahl über das terrestrische Netz 1 der Hub 4 zugesandt.

Umkonfigurationen können ohne weiteres ausgeführt werden, wobei Änderungen bezüglich Anzahl und/oder Frequenzen der Übertragungskanäle, Datenrate, Ursprung-/Zielorte, Master/Slave-Beziehung etc. einer individuellen Umkonfiguration gegebenenfalls jedes Back-Up Terminals bedürfen. Das Laden neuer Software wird über die terrestrische Anbindung von der Hub 4 aus vorgenommen. Dazu wird die Neukonfiguration in der Hub 4 erstellt und den speicherprogrammierbaren Steuerschaltungen 7 (SPS) der einzelnen Terminals nach Anwahl zugespielt.

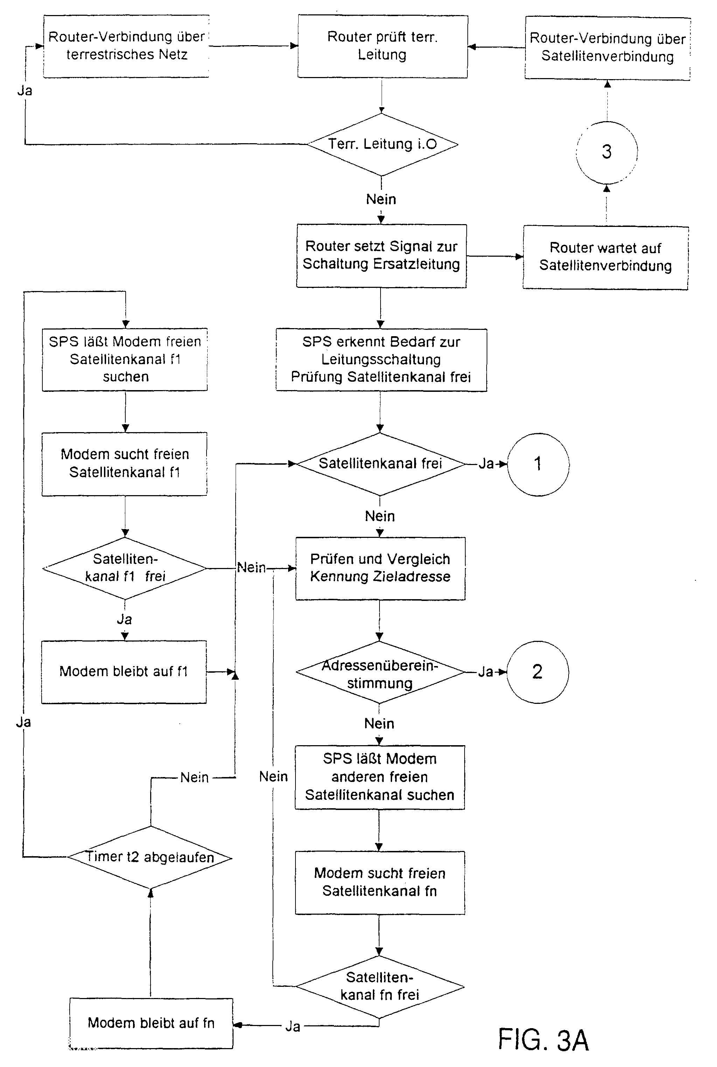

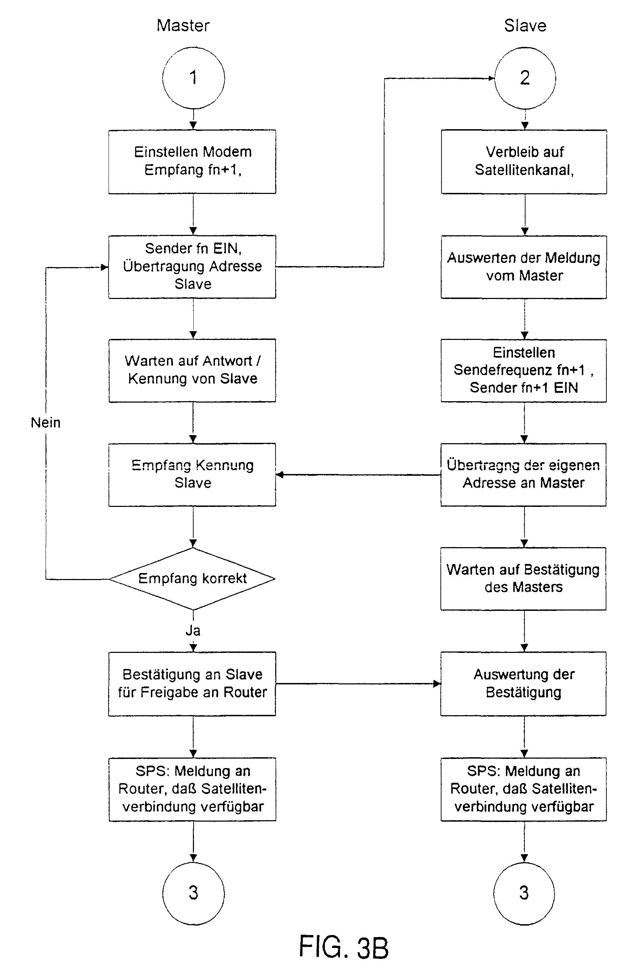

In den Figuren 3A und 3B ist ein prinzipielles Flußdiagramm dargestellt, daß einen Verfahrensablauf zur Steuerung der Nutzung von Satelliten-Übertragungskapazität zum Ersetzen gestörter Datenleitungen in terrestrischen Netzen zeigt. Die terrestrische Leitung wird zunächst vom Router daraufhin geprüft, ob die Leitung in Ordnung ist oder nicht. Ist sie in Ordnung, wird dies durch einen Befehl bzw. ein Signal "Ja" angezeigt und der Router stellt die Verbindung über das terrestrische Netz her. Wird dagegen bei der Prüfung ein Signal "Nein" erzeugt, dann veranlaßt der Router ein Signal zur Schaltung einer Ersatzleitung und wartet auf die Satellitenverbindung. Wenn eine Satellitenverbindung verfügbar ist, angezeigt durch die eingekreiste 3 im Diagramm nach Fig. 3A und Fig. 3B, wird die Router-Verbindung über eine Satellitenverbindung hergestellt. Im nachfolgenden wird die Erzeugung der Meldung an den Router, daß eine Satellitenverbindung verfügbar ist, dargestellt durch die eingekreiste 3, anhand des Flußdiagramms nach den Figuren 3A und 3B erklärt. Wenn der Router das Signal zur Schaltung einer Ersatzleitung abgibt, erkennt die Steuerschaltung SPS Bedarf zur Leitungsschaltung, und damit zur Prüfung, ob ein Satellitenkanal bzw. Satellitenkapazität frei ist. Ist Satellitenkapazität frei, dann wird die Prüfung mit einem "Ja" beantwortet und ein entsprechendes Signal, daß mit der eingekreisten 1 dargestellt ist, ausgelöst. Dieses Signal wird auf das Masterterminal gegeben, wie in Fig. 3B dargestellt. Dadurch wird das Sat-Modem des Masters auf Empfang der Frequenz fₙ₊₁ eingestellt, gleichzeitig wird auch der Sender eingeschaltet und es findet die Übertragung der Adresse zum Slave-Terminal statt, wobei noch das Adressenübereinstimmungssignal, dargestellt durch die eingekreiste 2, vorliegen muß. Das Masterterminal muß nun entsprechend dem Diagramm in Fig. 3B auf Antwort bzw. Kennung vom Slave warten. Wenn das Slave-Terminal auf dem Satellitenkanal verbleibt, wird danach die Auswertung der Meldung vom Master durchgeführt und als Ergebnis davon wird die Sendefrequenz fₙ₊₁ und der Sender fₙ₊₁ eingestellt bzw. eingeschaltet. Danach erfolgt die Übertragung der eigenen Adresse an das Master-Terminal, das auf den Empfang der Kennung vom Slave-Terminal wartet. Ist der Empfang korrekt, dann erfolgt die Bestätigung an das wartende Slave-Terminal und die Freigabe an den Router. Vor dem Warten auf Bestätigung des Master-Terminals wird noch die Adresse des Slave-Terminals an das Master-Terminal übertragen. Bei korrektem Empfang, mit "Ja" in Fig. 3B gekennzeichnet, gibt die Steuerschaltung SPS eine Meldung an den Router, daß die Satellitenverbindung verfügbar ist, wodurch die Meldung, dargestellt durch die eingekreiste 3, erfolgt und der Router somit seine Wartestellung verlassen und die Satellitenverbindung nutzen kann. War der Empfang hingegen nicht korrekt, dargestellt durch ein "Nein" in Fig. 3B, dann erfolgt wie bereits gesagt, die Übertragung der Adresse an das Slave-Terminal. War der Empfang korrekt, dann wird dies wie bereits gesagt, durch eine mit "Ja" gekennzeichnete Meldung angegeben. Das Slave-Terminal wartet auf die Bestätigung des Masters, wertet die Bestätigung aus und gibt dann im Falle der Übereinstimmung dies an die Steuerschaltung weiter, wodurch die Meldung von der Steuerschaltung des Slave-Terminals an den Router erfolgt, daß die Satellitenverbindung verfügbar ist, angezeigt durch die eingekreiste 3 in Fig. 3B.

Im nachfolgenden wird nun noch die Meldung der Adressenübereinstimmung, angezeigt durch die eingekreiste 2, beschrieben. Ist kein Satellitenkanal frei, dann wird dies durch eine Meldung "Nein" in Fig. 3A angezeigt. Daraufhin erfolgt ein Prüfen und ein Vergleich der Zieladresse mit der Meldung "Nein", ob der Satellitenkanal f₁ frei ist. Findet nämlich keine Adressenübereinstimmung statt, dargestellt durch die Meldung "Nein", dann läßt die Steuerschaltung das entsprechende Modem einen anderen freien Satellitenkanal fₙ suchen. Ist der Satellitenkanal fₙ nicht frei, dann erfolgt Rückmeldung an die Prüf- und Vergleichsschaltung für die Zieladresse. Ist hingegen der Satellitenkanal fₙ frei, dann wird dies durch eine Meldung "Ja" angezeigt und das Modem bleibt auf der Frequenz fₙ. Ist der Timer t₂ nicht abgelaufen, dann wird dies durch eine Meldung "fₙ Satellitenkanal frei" rückgekoppelt. Ist hingegen der Timer t₂ abgelaufen, wird dies durch ein "Ja" angezeigt und die Steuerschaltung läßt das Modem einen freien Satellitenkanal f₁ suchen. Ist der Satellitenkanal f₁ nicht frei, dann wird eine Meldung "Nein" erzeugt und es erfolgt wiederum ein Prüfen und ein Vergleich der Zieladresse. Ist hingegen der Satellitenkanal f₁ frei, dann bleibt das Modem auf der Frequenz f₁ und es wird eine Meldung entsprechend der eingekreisten 1 erzeugt.

### Begriffserläuterungen

- DAMA-Funktion:: Demand Assigned Multiple Access: Bedarfsorientierte Zuweisung von Übertragungskapazität nach Anforderung mit wechselnden Zielen (Wählnetz), üblicherweise mit zentraler Kapazitätsverwaltung;
- Loop-Back Mode:: Einstellungsmöglichkeiten im Sat-Modem zur Bildung von Schleifen im Übertragungsweg zur Überprüfung und zur Abkopplung einzelner Funktionsteile innerhalb des Sat-Modems;
- M+C Schnittstelle:: Monitoring und Control Schnittstelle des Sat-Modems, über die von außen die Konfiguration des Sat-Modems eingestellt und überwacht werden kann;
- Modem-Sync:: Demodulator des Sat-Modems hat auf ein Empfangssignal aufsynchronisiert; Verbindung über Satellit nutzbar;
- Modem-SyncLoss:: Demodulator des Sat-Modems hat Empfangsssignal verloren, Verbindung unterbrochen;
- Pool:: Anzahl von mehreren Satelliten-Übertragungskanälen einer Datenrate;
- Raumsegment-Kapazität:: Übertragungskapazität im Satelliten;
- Satelliten-Modem:: Modulator/Demodulator, der die terrestrischen Nutzdaten in die Zwischenfrequenzebene (ZF, 70 Mhz) umsetzt;
- SPS:: Speicherprogrammierbare Steuerung, die eigenständig Überwachungs- und Steuerfunktionen ausführt.

### Liste der Bezugszeichen

- 1: terrestrisches Netz
- 2,3: Leitungen
- 4: Hub
- 5: Modem
- 6: Router
- 7: Steuerschaltung
- 8: Kundeneinrichtungen
- 9: Terminals
- 10-14: Leitungen
- 15: Satelliten-Modem
- 16,16': Back-Up Terminals
- 17: Leitungen
- 18: Satellitenantenne
- 19: Trägerfrequenzen; Träger
- 20: Satellit

## Patentansprüche

1. Verfahren zur Steuerung der Nutzung von Satelliten-Übertragungskapazität zum Ersetzen gestörter Datenleitungen (2, 3) in terrestrischen Netzen (1), wobei eine Ersatzschaltung über Satellit (20) eingeleitet und überwacht wird und die Zuordnung im Ersatzschaltfall erfolgt, **dadurch gekennzeichnet,**
**dass** Master- und Slave-Terminals (16 bzw. 16') zugeordnete Steuereinheiten (7) softwaregesteuert im Ersatzschaltfall automatisch, dezentral und lokalisiert die Steuerung übernehmen und den Ersatzschaltfall aus der Analyse eines Datensteuersignals vom Datenübertragungsgerät (6) eines Anwenders erkennen und
**dass** der Belegungszustand der Satellitenübertragungskapazität lokal und automatisch softwaregesteuert überwacht wird und über die jeweilige dezentrale, lokale und intelligente Steuereinheit (7) softwaregesteuert die Ersatzschaltungsoperationen erfolgen.

2. Verfahren nach Patentanspruch 1, **dadurch gekennzeichnet,**
**daß** die erforderliche Steuersoftware in der jeweiligen lokalen Steuereinheit (7) eingespeichert wird,
**daß** dadurch die Komponenten des Terminals (16 bzw. 16') im Wartezustand und im Ersatzschaltfall gesteuert und überwacht werden und
**daß** die eingespeicherte Software auf Steuersignale einer Kundendateneinrichtung reagiert, ohne jedoch die Kundendaten selbst zu beeinflußen.

3. Verfahren nach einem der Patentansprüche 1 oder 2, **dadurch gekennzeichnet,**
**daß** durch die automatisierte und dezentrale Steuerung der Nutzung von Satelliten-Übertragungskapazität für das Ersatzschalten ausgefallener Leitung in terrestrischen Netzen und die Führung der Ersatzverbindung über ein zweites Übertragungsmedium, einschließlich einer automatisierten Kapazitätsnutzungsüberwachung softwaregesteuert erfolgt, wobei lokal der Belegungszustand der Satellitenübertragungskapazität überwacht und der Ausfall der terrestrischen Verbindung erkannt wird.

4. Verfahren nach einem der Patentansprüche 1 bis 3, **dadurch gekennzeichnet,**
**daß** zur Verbindungsdatensammlung und der Vorkonfiguration der einzelnen Terminals (16 bzw. 16') bei Erstinstallation und bei Änderung der Netzgestaltung eine passive Hub (4) dient, die entweder über eine Telefon-Modemstrecke, über einen ISDN-Anschluß, über eine GSM-Verbindung mit Modem, oder über eine Satellitenverbindung innerhalb der im Netz verfügbaren Kapazität mit den Terminals (16, 16') verbunden ist.

5. Verfahren nach einem der Patentansprüche 1 bis 4, **dadurch gekennzeichnet,**
**daß** eine Synchronisation aller Satelliten-Terminals (16 bzw. 16') durch die Integration eines DCF77-Empfängers in jedem Terminal dadurch erfolgt, daß die Normzeit als Systemzeit für die Taktung verwendet wird.

6. Verfahren nach einem der Patentansprüche 1 bis 5, **dadurch gekennzeichnet,**
**daß** der Senderträger des betroffenen Satellitenmodems im Ersatzschaltfall eingeschaltet wird, den dann alle anderen, nicht betroffenen Terminals im Netz mit empfangen,
**daß** dabei die Übertragungskapazität des asynchronen Overhead des Sat-Modems für die Übertragung von Zieladressen benutzt wird und
**daß** auch im Ausfallzustand des terrestrischen Übertragungsweges eine freilaufende Ersatzschaltung über ein anderes Medium erfolgt.

7. Schaltungsanordnung zur Durchführung des Verfahrens zur Steuerung der Nutzung von Satelliten-Übertragungskapazität zum Ersetzen gestörter Datenleitungen (2, 3) in terrestrischen Netzen (1), wobei eine Ersatzschaltung über Satellit (20) eingeleitet und überwacht wird und eine Zuordnung im Ersatzschaltfall erfolgt, nach einem der Patentansprüche 1 bis 6, **dadurch gekennzeichnet,**
**dass** ein Back-Up Terminal als Master-Terminal (16) oder Slave-Terminal (16') eine Antenne (18), einen Träger (19) und einen Satelliten (20)umfasst, die Terminals jeweils mit einem Satelliten-Modem (15) verbunden sind zwecks automatischer Umschaltung im Ersatzschaltfall des terrestrischen Netzes (1) auf freie Übertragungskanäle von Satelliten (20) und über eigenständige, softwaregesteuerte dezentral angeordnete, lokale und intelligente Steuereinheiten (7) mit zugeordnetem Modem (5) verfügen, die über Router (6), an denen Kundeneinrichtungen (8) und Terminals (9) angeschlossen sind, mit Leitungen (2, 3) und damit gegebenenfalls gestörte Leitungen (2) des terrestrischen Netz (1) verbunden sind, wobei die Steuereinheiten jeweils den Ersatzschaltfall aus der Analyse eines Datensteuersignals vom Datenübertragungsgerät eines Anmelders erkennt, den Belegungszustand der Satellitenübertragungskapazität überwacht und darüber Ersatzschaltoperationen erfolgen.

8. Schaltungsanordnung nach Patentanspruch 7, **dadurch gekennzeichnet,**
**daß** mit dem terrestrischen Netz (1) eine Hub (4) über ein Modem (5) verbunden ist, die mit einer Software ausgestattet ist, die über die terrestrische Verbindung mit den einzelnen speicherprogrammierbaren Steuerschaltungen (7) der Terminals (16, 16') kommuniziert, wobei sowohl die speicherprogrammierten Steuerschaltungen (7) als auch die Hub (4) über ein jeweils eigenes Adressierungssystem verfügen.

9. Schaltungsanordnung nach dem Oberbegriff des Patentanspruches 8, **dadurch gekennzeichnet,**
**dass** die Hub (4) die Nutzung mehrerer Übertragungs-Pools registriert,
**dass** die Hub (4) Kenntnis über die einzelnen Übertragungskanäle hat sowie über ihre Zuordnung zu den jeweiligen Pools,
**dass** im Störungsfall die speicherprogrammierbaren Steuerschaltungen (7) die Modem-Parameter zu einer ersten Störungseingrenzung an die Hub (4) abgeben, wobei ein Trägerpool mit einer Anzahl von mehreren Satelliten-Übertragungskanälen (fₙ - fₙ₊₁) einer bestimmten Datenrate ausgestattet ist.

10. Schaltungsanordnung nach Patentanspruch 9, **dadurch gekennzeichnet,**
**daß** die Nutzung der Übertragungskanäle nach dem Prinzip des ersten Zugriffs erfolgt,
**daß** als zusätzliches Leistungsmerkmal eine Reservierung von Übertragungskanälen oder eine Vorrangberechtigung bei der Nutzung der Übertragungskanäle sowie deren zentrale Online-Überwachung der Nutzung des Pools erfolgt und
**daß** alle ersatzzuschaltenden Verbindungen symmetrische Duplexkanäle mit gleichen Datenraten in Hin- und Rückrichtung sind.

11. Schaltungsanordnung nach einem der Patentansprüche 8 bis 10, **dadurch gekennzeichnet,**
**dass** die einzelnen Übertragungskanäle zu Kanalpaaren mit den Mittenfrequenzen fₙ/fₙ₊₁, n = 1,3,5,... zusammengefasst sind.

12. Schaltungsanordnung nach einem der Patentansprüche 8 bis 11, **dadurch gekennzeichnet,**
**daß** die speicherprogrammierten Steuerschaltungen (7) mit jeweils einem Satellitenmodem (15) über eine Leitung (13) verbunden sind und außerdem mit Steuerleitungen (14 und 17),
**daß** die beiden Modems (15) jeweils mit einer Satelliten-Antenne (18) in Verbindung stehen, die über einen Satellit (20) über bestimmte Trägerfrequenzen (19) miteinander in Verbindung stehen.

13. Schaltungsanordnung nach einem der Patentansprüche 8 bis 12, **dadurch gekennzeichnet,**
**daß** ein Terminal als Back-Up-Terminal (16 oder 16') aus einer Satelliten-Außeneinheit, bestehend aus einer Antenne (18), einem Träger (19) und einem Satellit (20), weiterhin aus einer Verbindung zur Inneneinheit und der Inneneinheit mit dem Satelliten-Modem (15) und der speicherprogrammierten Steuerschaltung (7) sowie einem Anschluß der speicherprogrammierten Steuerschaltung (7) an das terrestrische Wählnetz (1) besteht.

14. Schaltungsanordnung nach Patentanspruch 8 oder 9, **dadurch gekennzeichnet,**
**daß** die Hub (4) aus einem Personalcomputer besteht, der über eine Schnittstellenkarte an das terrestrische Netz (1) angeschlossen ist und gegebenenfalls für die Weitergabe der Verbindungsdaten zu Tarifierungs/Fakturierungszwecken mit anderen Netzen verbunden ist.

## Claims

1. Process for controlling the use of satellite transmission capacity for the substitution of out-of-order data lines (2, 3) in terrestrial networks (1), alternative routing via satellite (20) being initiated and monitored and assignment being effected in the case of alternative routing, **characterized in that**
in the case of alternative routing, control units (7) associated with master and slave terminals (16 and 16') and controlled by software take over control automatically, decentrally and locally and detect the need for alternative routing from the analysis of a data control signal from the data transmission device (6) of a user; and
the occupancy state of the satellite transmission capacity is monitored locally and automatically under software control and the alternative routing operations are carried out under software control via the respective decentralized, local and intelligent control unit (7).

2. Process according to claim 1, **characterized in that**
the necessary control software is stored in the respective local control unit (7);
the components of the terminal (16 or 16') are thereby controlled and monitored in the waiting state and in the case of alternative routing; and
the stored software reacts to control signals of a customer data device without, however, influencing the customer data itself.

3. Process according to any one of claims 1 or 2, **characterized in that**
the automatic and decentralized control of the use of satellite transmission capacity for the substitution of out-of-order lines in terrestrial networks and the alternative routing via a second transmission medium, including automatic monitoring of capacity use, are effected under software control, the occupancy state of the satellite transmission capacity being monitored locally and the failure of the terrestrial call connection being detected locally.

4. Process according to any one of claims 1 to 3, **characterized in that**
a passive hub (4) is provided for call data collection and preconfiguration of the individual terminals (16 and 16') at initial installation and if there is a change in the network layout, said passive hub (4) being connected to the terminals (16, 16') either via a telephone-modem link, via an ISDN connection, via a GSM connection with modem or via a satellite connection within the capacity available in the network.

5. Process according to any one of claims 1 to 4, **characterized in that**
the synchronization of all satellite terminals (16 and 16') is accomplished by the integration of a DCF77 receiver in each terminal **in that** the standard time is used as the system time for clocking.

6. Process according to any one of claims 1 to 5, **characterized in that**
the transmitter carrier of the affected satellite modem is switched on in the case of alternative routing and is then also received by all other, non-affected terminals in the network;
the transmission capacity of the asynchronous overhead of the sat modem is used for the transmission of destination addresses; and
also when the terrestrial transmission path is out of order, there is free-running alternative routing via a different medium.

7. Circuit arrangement for implementing the process for controlling the use of satellite transmission capacity for the substitution of out-of-order data lines (2, 3) in terrestrial networks (1), alternative routing via satellite (20) being initiated and monitored and assignment being effected in the case of alternative routing, according to any one of claims 1 to 6, **characterized in that**
a backup terminal as master terminal (16) or slave terminal (16') consists of an antenna (18), a carrier (19) and a satellite (20), the terminals each being connected to a satellite modem (15) for the purpose of automatic alternative routing from the terrestrial network ( I ) to free transmission channels of satellites (20) and having independent, software-controlled, decentrally disposed, local and intelligent control units (7) with associated modems (5) which are connected via routers (6) - to which customer devices (8) and terminals (9) are connected - to lines (2, 3) and thus possibly out-of-order lines (2) of the terrestrial network (1), wherein the control units detect the need for alternative routing from the analysis of a data control signal from the data transmission device of a user, monitor the occupancy state of the satellite transmission capacity and alternative routing operations are carried out.

8. Circuit arrangement according to claim 7, **characterized in that**
connected to the terrestrial network (1) via a modem (5) is a hub (4) equipped with a software which communicates via the terrestrial connection with the individual stored-program control circuits (7) of the terminals (16, 16'), both the stored-program control circuits (7) and also the hub (4) having their own addressing system.

9. Circuit arrangement according to the preamble of claim 8, **characterized in that**
the hub (4) registers the use of a plurality of transmission pools;
the hub (4) has knowledge of the individual transmission channels as well as of their assignment to the respective pools;
in the case of a fault, the stored-program control circuits (7) transmit the modern parameters to the hub (4) for initial fault location, a carrier pool being equipped with a number of several satellite transmission channels (fₙ - fₙ₊₁) of a defined data rate.

10. Circuit arrangement according to claim 9, **characterized in that**
the transmission channels are used according to the principle of first come first served;
as an additional feature, there is the reserving of transmission channels or prioritization in the use of the transmission channels as well as the centralized online monitoring of the use of the pool; and
all calls to be alternatively routed are symmetrical duplex channels with identical data rates in the send and receive directions.

11. Circuit arrangement according to any one of claims 8 to 10, **characterized in that**
the individual transmission channels are combined into channel pairs with the mid-frequencies fₙ/fₙ₊₁ , n=1, 3, 5...

12. Circuit arrangement according to any one of claims 8 to 11, **characterized in that**
the stored-program control circuits (7) are each connected via a line (13) to a satellite modem (15) and also to control lines (14 and 17);
the two modems (15) are each in communication with a satellite antenna (18), said satellite antennas (18) being in communication with each other via a satellite (20) via defined carrier frequencies (19).

13. Circuit arrangement according to any one of claims 8 to 12, **characterized in that** one terminal as backup terminal (16 or 16') consists of a satellite external unit, consisting of an antenna (18), a carrier (19) and a satellite (20), and also of a connection to the internal unit and the internal unit with the satellite modem (15) and the stored-program control circuit (7) as well as a connection of the stored-program control circuit (7) to the terrestrial switched network (1).

14. Circuit arrangement according to claim 8 or 9, **characterized in that**
the hub (4) consists of a personal computer, said personal computer being connected via an interface card to the terrestrial network (1) and, where appropriate, being connected to other networks for the forwarding of the call data for purposes of tariffing/invoicing.

## Revendications

1. Procédé permettant de piloter l'utilisation de la capacité de transmission de satellites pour remplacer des lignes de données (2, 3) en dérangement dans les réseaux terrestres (1), une liaison de rétablissement via satellite (20) étant alors initialisée et surveillée et l'attribution intervenant lorsqu'une liaison de rétablissement est nécessitée, **caractérisé en ce que**
en cas de rétablissement, des unités de commande (7) pilotées par un logiciel et affectées au terminal maître et au terminal esclave (16 et/ou 16') se chargent de la commande automatiquement, de manière décentralisée et localisée, et identifient le cas de rétablissement en analysant un signal de commande de données émis par l'appareil de transmission des données (6) d'un utilisateur et
l'état d'occupation de la capacité de transmission du satellite est surveillé sur site et automatiquement par un logiciel et les opérations de rétablissement se font, commandées par logiciel, au niveau de l'unité de commande (7) décentralisée, locale et intelligente.

2. Procédé selon la revendication 1, **caractérisé en ce que**
le logiciel de commande nécessaire est mémorisé dans chaque unité de commande locale (7),
les composants du terminal (16 et/ou 16') sont commandés et surveillés de cette manière en état d'attente et en cas de rétablissement et
le logiciel mémorisé réagit aux signaux de commande d'un dispositif de données client, sans cependant influencer les données dudit client.

3. Procédé selon les revendications 1 ou 2, **caractérisé en ce que**
en raison de la commande automatisée et décentralisée de l'utilisation de la capacité de transmission du satellite pour la liaison de rétablissement des lignes défaillantes dans les réseaux terrestres, et de la réalisation de la liaison de remplacement via un deuxième moyen de communication, une surveillance de l'utilisation de capacité automatisée pilotée par logiciel est également réalisée, l'état d'occupation de la capacité de transmission du satellite étant surveillé au niveau local et la défaillance de la liaison terrestre étant identifiée.

4. Procédé selon les revendications 1 à 3, **caractérisé en ce que**
lors de l'installation initiale et lors de la modification de la conception du réseau, on utilise un Hub (4) passif relié aux différents terminaux (16, 16') par le biais d'un modem téléphonique, par un raccordement RNIS, par une liaison GSM avec modem ou par une liaison par satellite dans les limites de la capacité disponible dans le réseau pour rassembler les données de connexion et pour réaliser la configuration initiale des différents terminaux (16 et/ou 16').

5. Procédé selon les revendications 1 à 4, **caractérisé en ce que**
une synchronisation de tous les terminaux de satellites (16 et/ou 16') est obtenue en intégrant un récepteur DCF77 dans chacun des terminaux, la durée normée pouvant être ainsi utilisée en tant que durée système pour la synchronisation.

6. Procédé selon les revendications 1 à 5, **caractérisé en ce que**
en cas de rétablissement, le support d'émetteur du modem satellite concerné, que tous les autres terminaux non concernés présents dans le réseau reçoivent, est activé et
la capacité de transmission de l'overhead asynchrone du modem satellite est ici utilisée pour transmettre les adresses cible et
lorsque la voie de transmission terrestre est également défaillante, une liaison de rétablissement spontanée est établie par un autre moyen.

7. Configuration de circuit utilisée pour réaliser le procédé de commande permettant d'utiliser la capacité de transmission du satellite pour remplacer les lignes de données (2, 3) en dérangement dans les réseaux terrestres (1), une liaison de rétablissement via satellite (20) étant initialisée et surveillée et l'attribution intervenant en cas de rétablissement, selon une des revendications 1 à 6, **caractérisée en ce que**
un terminal Back-Up faisant office de terminal maître (16) ou de terminal esclave (16') comprend une antenne (18), un support (19) et un satellite (20), que chaque terminal est relié à un modem satellite (15) pour pouvoir commuter automatiquement en cas de rétablissement du réseau terrestre (1) sur les canaux de transmission libres de satellites (20) et dispose d'unités de commande indépendantes (7), commandées par logiciel de manière décentralisée, locales et intelligentes, avec le modem (5) qui leur est assigné, raccordé aux équipements (8) et aux terminaux (9) du client via un routeur (6), reliés aux lignes (2, 3) et ainsi aux lignes éventuellement en dérangement (2) du réseau terrestre (1), les unités de commande identifiant chaque cas de rétablissement en analysant le signal de commande de données transmis par l'appareil de transmission des données d'un demandeur, surveillant l'état d'occupation de la capacité de transmission du satellite, les opérations de commutation de remplacement intervenant alors.

8. Configuration de circuit selon la revendication 7, **caractérisée en ce que**
un Hub (4) est raccordé au réseau terrestre (1) par un modem équipé d'un logiciel qui communique via les lignes terrestres avec les différents circuits de commande (7) programmables en mémoires des terminaux (16, 16'), non seulement les circuits de commande programmables en mémoire (7), mais aussi le Hub (4) disposant de leur propre système d'adressage.

9. Configuration de circuit selon le terme générique de la revendication 8, **caractérisée en ce que**
le Hub (4) enregistre l'utilisation de plusieurs pools de transmission,
le Hub (4) connaît les différents canaux de transmission ainsi que leur assignation par rapport aux différents pools,
dans le cas d'une défaillance, les circuits de commande programmables en mémoire (7) transmettent les paramètres du modem au Hub (4) pour une première localisation du dérangement, un pool support étant équipé de plusieurs canaux de transmission satellite (fₙ - fₙ₊₁) dont le débit de données est défini.

10. Configuration de circuit selon la revendication 9, **caractérisée en ce que**
l'utilisation des canaux de transmission intervient selon le principe du premier accès,
en tant que caractéristique supplémentaire, une réservation des canaux de transmission ou une autorisation prioritaire intervient lors de l'utilisation des canaux de transmission et de leur surveillance en ligne centrale de l'utilisation du pool et
toutes les liaisons à rétablir sont des canaux duplex symétriques possédant le même débit de données dans le sens aller et retour.

11. Configuration de circuit selon une des revendications 8 à 10, **caractérisée en ce que**
les différents canaux de transmission sont réunis en paires de canaux dont les fréquences moyennes sont fₙ/fₙ₊₁, n = 1, 3, 5 ...

12. Configuration de circuit selon une des revendications 8 à 11, **caractérisée en ce que**
les circuits de commande programmables en mémoire (7) sont tous raccordés à un modem satellite (15) via une ligne (13), ainsi qu'avec les lignes de commande (14 et 17),
les deux modems (15) sont chacun en liaison avec une antenne satellite (18), ces antennes communiquant entre elles via un satellite (20) par le biais de fréquences porteuses définies.

13. Configuration de circuit selon une des revendications 8 à 12, **caractérisée en ce que**
un terminal Back-Up (16 ou 16') dispose d'une unité externe de satellite, composée par une antenne (18), un support (19) et un satellite (20), ainsi que d'une connexion avec l'unité interne et de l'unité interne avec le modem satellite (15) et du circuit de commande programmable en mémoire (7), ainsi que d'un raccordement du circuit de commande programmable en mémoire (7) au réseau commuté terrestre (1).

14. Configuration de circuit selon une des revendications 8 ou 9, **caractérisée en ce que**
le Hub (4) se compose d'un ordinateur personnel raccordé au réseau terrestre (1) par une carte interface et est éventuellement relié à d'autres réseaux pour la transmission des données de connexion pour des raisons de tarification/facturation.
